# EUROPEAN PATENT SPECIFICATION

(11) **EP 0 397 276 B1**
(45) Date of publication and mention of the grant of the patent: **26.07.1995**
(21) Application number: 90201181.6
(22) Date of filing: 09.05.1990
(51) Int. Cl.: C08F 8/14, C08F 8/18, C08F 8/34, C08F 8/44, C08F 8/42, C08F 287/00, C08F 297/04

(54) **Functionalized elastomeric polymers**
Funktionalisierte Elastomerpolymere
Polymères élastomères fonctionnalisés

(30) Priority: 09.05.1989 US 349545; 09.05.1989 US 349547
(43) Date of publication of application: 14.11.1990
(73) Proprietor: SHELL INTERNATIONALE RESEARCH MAATSCHAPPIJ B.V., 2596 HR Den Haag (NL)
(72) Inventor: Wong, Pui Kwan, Katy, Texas 77540 (US)

(56) References cited:
- EP-A- 0 215 501
- EP-A- 0 227 163
- US-A- 4 033 888
- US-A- 4 292 414
- US-A- 4 708 990

## Description

This invention relates to certain functionalized elastomeric polymers. More particularly, the invention relates to elastomeric polymers functionalized by the presence therein of selected pendant ester groups, to a process for preparing such polymers and to the heat-cured products based thereon.

Elastomeric polymers, both homopolymers and copolymers, are well known in the art and include natural rubber and a wide variety of synthetic elastomeric materials.

It is known that the properties of many elastomeric polymers are often modified by "curing" or cross-linking the polymer, typically by adding a cross-linking or curing agent and maintaining the resulting mixture at an elevated temperature. Cross-linking of natural rubber by heating with sulphur or a sulphur-containing compound is the commercial vulcanization needed to make the rubber suitable for many commercial applications. Other types of curing are available, such as by heating with peroxides.

A further method has been described in EP-A-227 163, in which method elastomeric polymer possessing olefinic unsaturation is crosslinked with the help of specific benzocyclobutene derivatives. These methods often have disadvantages such as a slow curing rate which requires additional materials to accelerate or promote the curing rate to a commercially acceptable level, the presence of undesirable side reactions caused by the presence of free radicals generated by the curing process, or the release of volatile side products during curing. It would be of advantage to provide heat-curable elastomeric polymers, that is, functionalized elastomeric polymers which are curable at acceptable rate without the emission of volatiles and without the requirement for added curing agents and accelerators.

As a result of extensive research and experimentation a novel class of heat-curable elastomeric polymers was found, which polymers do not suffer from one or more of the disadvantages as mentioned hereinbefore, and which polymers are functionalized by the presence of pendant ester groups wherein the ester contains certain types of reactive unsaturation.

Accordingly this invention provides heat-curable elastomeric polymers comprising elastomeric polymers having at least one pendant carboxylic acid ester group 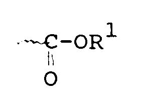
wherein the ester moiety is a group R¹ wherein each R¹ is independently propargyl, vinylbenzyl (formally named styrylmethyl) or 4-(2-oxazolinyl)benzyl, or contains an arylcyclobutene group.

A preferred group of arylcyclobutene group-containing ester groups comprises those of general formula 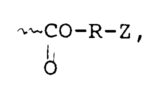
wherein R is an alkylene group of up to 4 carbon atoms and Z is an arylcyclobutene group. Especially preferred elastomeric polymers of the present invention contain a plurality of pendant ester groups which are attached directly to a chain carbon atom of the elastomeric polymer or attached indirectly through a bridging moiety to such a carbon atom such as a vinylbenzyl ester moiety and more preferably a 4-vinylbenzyl group.

The nature of the carboxylic acid group-containing elastomeric polymers on which the elastomeric polymers of the present invention may be considered to be based, is not critical, provided such polymers contain at least one carboxylic acid group or a derivative thereof, such as a carboxylate group.

Carboxylic acid group-containing elastomeric polymers are well-known and include such polymers wherein the carboxylic acid functionality was introduced during the preparation of said polymers, such as for example 1,3-butadiene-acrylic acid copolymers as described e.g. in Polymer Bulletin 1986, 16, 35-41, as well as polymers wherein the carboxylic acid functionality was introduced subsequent to the preparation of the elastomeric polymer.

A number of methods are known in the art which serve to introduce carboxylic acid functionality onto the base elastomeric polymer molecule. In one modification, carboxylic acid groups are introduced directly onto carbon atoms of monomers which form a portion of the polymer by consecutive processes of metalation, carboxylation and acidification. The process of metalation is known in the art, being described more fully e.g. in U.S. 4,145,298.

The carboxylation process which is applied to the metalated elastomeric polymer is also well known in the art, and is described more fully in e.g. U.S. 4,145,490, U.S. 3,976,628 and published European Patent Application 215,501. The metalation process serves to introduce the alkali metal onto the polymer, particularly in any aromatic portion of the elastomeric polymer molecule, e.g., onto carbon atoms of aromatic rings pendant from the polymer chain, but may also introduce alkali metal onto aliphatic carbon atoms, particularly carbon atoms which are allylic to carbon-carbon unsaturation in any aliphatic portion of the polymer molecule. The metalated polymer reacts with carbon dioxide to produce an alkali metal salt of the carboxylated elastomeric polymer. Finally the alkali metal salt is acidified as by contact with dilute mineral acid, e.g., hydrochloric acid, and is recovered as the carboxylic acid-modified elastomeric polymer. A further source of metalated elastomeric polymers are elastomeric polymers prepared via an anionic polymerization process employing an organo alkali metal catalyst, and which polymers have an alkali metal atom on the end of the polymer chain.

In an alternate modification, the carboxylate-modified elastomeric polymers are those polymers wherein the carboxylic acid function is attached to a monomer which forms a portion of the elastomeric polymer indirectly through a bridging or connecting group. Such carboxylic acid-modified polymers are typically produced by employing the carbon-carbon unsaturation of aliphatic portions of the molecule, or carbon atoms adjacent thereto, as active sites for introduction of the carboxylic acid function. One conventional type of this process involves, in effect, the addition of the elements of a mercaptocarboxylic acid across a carbon-carbon double bond of the aliphatic portion of the elastomeric polymer molecule.

The mercaptocarboxylic acid addition is well known in the art and is described e.g. in U.S. 3,052,657 and in published Japanese Patent Application 54050590.

An alternate process of introducing pendant carboxylic acid groups or precursors thereof onto the elastomeric polymer molecule is to graft acid monomers onto the aliphatic portion of the polymer. In a generally preferred process, elastomeric polymers having carbon-carbon unsaturation in the aliphatic portion thereof are reacted with a maleic acid compound to form what is commonly referred to as a maleated polymer. The production of these maleic acid compound-modified elastomeric polymers is well known in the art, e.g. from U.S. 4,292,414; U.S. 4,427,828; U.S. 4,033,888; U.S. 4,628,072; U.S. 4,659,970 and U.S. 4,657,921. Other related processes are described in U.S. 4,578,429 and U.S. 4,670,173.

The elastomeric polymers useful as base polymers from which the carboxylic acid group-containing elastomeric polymers may be produced are the materials commonly known as "rubbers" and include natural rubber as well as the numerous synthetic elastomers. The synthetic elastomeric polymers are illustrated by homopolymers such as polybutadiene, polyisoprene and polychlorobutadiene (chloroprene) as well as by copolymers of butadiene or isoprene with styrene, acrylonitrile, alpha-methylstyrene and methacrylonitrile and the terpolymers known as EPDM polymers, for example, terpolymers of ethylene, propylene and a diene monomer such as cyclopentadiene. Such polymers, if not homopolymers, are suitably random as in the case of butadiene-acrylonitrile rubber or alternatively are block copolymers as in the case of the thermoplastic elastomeric polymers of the polystyrene-polybutadiene-polystyrene type. Such elastomeric polymers are more fully described, for example, by Billmeyer, Jr. in Textbook of Polymer Science, 3rd Edition, 1984, 371-82, and in Kirk-Othmer Encyclopedia of Chemical Technology, 1965, Vol. 7, 677-716, Vol. 17, 543-684 and Supplement Volume, 1971, 910-32.

In the preferred embodiment of the invention, the elastomeric polymer to be functionalized is a modified block copolymer which has been selectively hydrogenated. The preferred block copolymer base polymers suitable for selective hydrogenation are thermoplastic elastomers characterized by at least one block of at least predominantly polymerized vinyl aromatic hydrocarbon (A block) and at least one block of at least predominantly polymerized conjugated alkadiene (B block). Preferred vinyl aromatic compounds are styrene and styrene homologs. Preferred alkadienes are butadiene and isoprene, particularly butadiene.

These block copolymers are well known in the art and the characterization and preparation of such polymers are illustrated by U.S. 3,251,905; U.S. 3,390,207; U.S. 3,598,887; U.S. 4,219,627; U.S. 4,408,357; U.S. 4,497,748 and U.S. 4,426,495.

Block copolymers of the SBS (polystyrene-polybutadiene-polystyrene) type are particularly preferred. These block copolymers are now conventional and a number are commercial, being marketed by Shell Chemical Company as KRATON (KRATON is a trade mark) Thermoplastic Rubber.

The selectively hydrogenated block copolymers of these types are also well known in the art with a number being commercial. For example, certain of the selectively hydrogenated block copolymers are marketed by Shell Chemical Company as KRATON G Thermoplastic Rubber.

Although the polymers are suitably maleated or are reacted with mercaptocarboxylic acids to introduce pendant carboxylic acid groups, the preferred method of introducing functionality is through a metalation/carboxylation process as described above.

Preferably the carboxylated polymer will contain a plurality of at least 2 carboxylic acid moieties per polymer molecule, more preferably at least 5 and most preferably at least 10 carboxylic acid moieties per elastomeric polymer molecule.

Another feature of the present invention is a process for the preparation of the heat-curable elastomeric polymers, which comprises the neutralization of a carboxylic acid-modified elastomeric polymer, followed by reaction with a compound of formula YR¹, wherein Y is halogen or sulphonic ester and R¹ represents propargyl, vinylbenzyl, 4-(2-oxazolinyl)benzyl or contains an arylcyclobutene group, more specifically the group ∼R-Z, wherein Z is an arylcyclobutene group.

Suitable groups Y in the above formula are those groups commonly referred to as good leaving groups in nucleophilic substitution reactions, such as for example chloro, bromo or iodo, preferably chloro or bromo; or sulphonic ester such as aryl sulphonate, e.g., tosylate, brosylate or nosylate; alkyl sulphonate, e.g., mesylate; and fluoroalkyl sulphonate, e.g., triphlates, nonaphlates or tresylates. R is preferably methylene or ethylene.

In a preferred embodiment the group Y of the compound YR¹ is halogen, i.e. fluoro, chloro, bromo or iodo, and R¹ is propargyl, vinylbenzyl, preferably 4-vinylbenzyl or 4-(2-oxazolinyl)benzyl; or Y is halogen or sulphonic ester and R¹ contains an arylcyclobutene group. When Y represents halogen, chloro and bromo are preferred halogens.

Unsaturated organic halides of formula YR¹ include propargyl bromide, propargyl chloride, 4-vinylbenzyl chloride and 4-(2-oxazolinyl)benzyl bromide. The preferred R¹ group is propargyl and the preferred unsaturated halide is propargyl bromide.

Preferably the arylcyclobutene group is a group of formula ∼R-Z, wherein R is an alkylene group of up to 4 carbon atoms, preferably methylene or ethylene, and Z is an arylcyclobutene group.

The arylcyclobutene group Z is an aryl group which contains one or more cyclobutene rings fused to an aromatic ring. An aryl group refers to any aromatic moiety of up to 20 carbon atoms and from one to 3 aromatic rings, inclusive. Suitable aryl groups include the single ring group benzene, fused-ring aromatic compounds, e.g. naphthalene, phenanthrene or anthracene, directly joined aryl compounds, e.g., biphenyl, or indirectly joined aromatic compounds comprising two or more aromatic moieties joined by an alkylene group, e.g., diphenyl alkanes. Z may contain substituents on the aromatic moiety other than the group -R-Y, such as lower alkyl, e.g., methyl or ethyl, or cyano, provided the substituents are inert under the conditions of the process of the invention. The cyclobutene ring may also contain such substituents, however, it is noted that substitution on the cyclobutene ring may affect the temperature at which the arylcyclobutene will undergo heat induced curing which likely involves ring opening to give reactive o-quinodimethane structures. Substitution of the cyclobutene ring generally lowers the temperature at which ring opening occurs. When the cyclobutene ring is unsubstituted, the ring opening typically does not occur at temperatures below 200 °C. Preferred arylcyclobutenes are unsubstituted other than by hydrogen and the group -R-Y, and the preferred arylcyclobutene group Z is benzocyclobutene.

The preferred arylcyclobutene compound Y-R-Z is a halomethylbenzocyclobutene of the formula 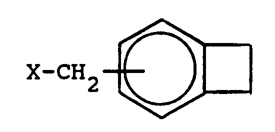
where X is upper halo, but preferably is chloro or bromo and most preferably is chloro.

The preparation of halomethylbenzocyclobutene is known, e.g. from J. Chem. Soc. Chem. Commun., 1979, 207 and the preparation of selected benzocyclobutene compounds will be described hereinafter.

The neutralization is conveniently conducted by contacting the carboxylic acid-modified elastomeric polymer in liquid phase non-aqueous solution with a substantially equivalent amount of base. Suitable bases to be employed in the neutralization include alkali metal bases such as alkali metal hydroxides, e.g., sodium hydroxide or potassium hydroxide, or alkali metal carbonates and bicarbonates such as sodium bicarbonate, potassium carbonate, lithium bicarbonate and sodium carbonate. Preferred bases, however, are organic bases such as quaternary ammonium hydroxides and particularly the tetraalkylammonium hydroxides. Illustrative tetraalkylammonium hydroxides are those wherein each alkyl independently is alkyl of up to 10 carbon atoms inclusive, preferably of up to 4 carbon atoms inclusive, such as tetramethylammonium hydroxide, tetrabutylammonium hydroxide, trimethylpropylammonium hydroxide and methyltrihexylammonium hydroxide. Neutralization is conducted in substantially neutral liquid phase solution in an inert reaction diluent. Suitable diluents are organic diluents and include ethers, cyclic or acyclic, such as diethylether, diethylene glycol dimethyl ether, tetraethylene glycol diethyl ether, tetrahydrofuran and dioxane; sulphur-containing diluents such as dimethyl sulphoxide and sulfolane; and amides free from hydrogen substitution on the amide nitrogen such as N,N-dimethylformamide, N,N-diethylacetamide and N-methyl-2-pyrrolidone. Preferred diluents are tetrahydrofuran and dioxane. The neutralization is typically conducted by dissolving the carboxylic acid-modified elastomeric polymer in the reaction diluent and adding base to the resulting mixture to the point of neutrality. Best results are obtained in the subsequent esterification process if care is taken to avoid the addition of excess base during neutralization. It is possible and generally preferred to follow the course of the neutralization through the use of an indicator such as phenolphthalein or by potentiometric methods to avoid the addition of substantial amounts of excess base, e.g., more than a 5-10% excess of base over that required for neutralization.

Neutralization of the carboxylic acid-modified elastomeric polymer results in conversion to the corresponding elastomeric polymer modified by the presence of carboxylate groups. Reaction of the base with pendant carboxylic acid groups results in the conversion of carboxylic acid to carboxylate groups. When the elastomeric polymer is a maleated polymer derived from maleic anhydride, a somewhat more complex reaction takes place. The pendant anhydride groups formed as depicted above are ring opened by reaction with base to form a carboxylate group and a second group the nature of which depends upon what materials are present during neutralization. In such instances it is helpful to employ an amount of an alkanol, e.g., ethanol or methanol, in the neutralization process to produce an ester group as well as a carboxylate group on ring opening of the anhydride moiety. Such alkanol is conveniently provided by employing an alcoholic solution of the base.

The carboxylate-modified elastomeric polymer is esterified by contact of the modified polymer and the unsaturated organic halide or unsaturated sulphonic ester reactant at an elevated temperature in liquid phase solution. Best results are obtained by adding the unsaturated organic halide or sulphonic ester reactant to the carboxylate-modified elastomeric polymer in the substantially neutral solution in which the carboxylate-modified polymer was prepared. Suitable esterification promoters, such as tetraalkylammonium halides, may be added to the solution to accelerate the reaction or improve the esterification yield. Suitable reaction temperatures are in the range of from 20 °C to 150 °C, preferably from 50 °C to 100 °C. Suitable reaction pressures are those which are sufficient to maintain the reaction mixture in a liquid phase. Such pressures are typically up to 20 atmospheres but more often are from 1 atmosphere to 10 atmospheres.

The quantity of unsaturated organic halide or sulphonic ester reactant to be employed will vary to some extent depending upon the degree to which the elastomeric polymer has been functionalized and the extent to which it contains pendant carboxylate groups. In general, quantities of unsaturated organic halide or sulphonic ester reactant in the range of from 1 mole to 100 moles per mole of carboxylate-modified elastomeric polymer are satisfactory.

According to a more specific embodiment, amounts of arylcyclobutene compound in the range of from 10 moles to 50 moles per mole of carboxylate-modified elastomeric polymer are preferred. Subsequent to reaction, the ester-modified elastomeric polymer is recovered by conventional methods such as selective extraction or precipitation with a non-solvent.

The ester-modified elastomeric polymers of the invention offer utilities associated with the elastomeric polymers from which they are produced. The polymers are useful in a number of moulding applications including the moulding of gears and valves and have additional utility in the production of adhesives. Those polymers of relatively low carbon-carbon aliphatic unsaturation offer good resistance to oxidative and chemical degradation in applications where shaped articles are desired and moreover exhibit good paintability and printability. However, unlike most conventional elastomeric polymers the ester-modified elastomeric polymers of the invention are heat-curable or heat-cross-linkable when heated to temperatures above 175 °C, preferably above 200 °C, without the emission of volatiles and without the requirement for additional curing agents or accelerators. The resulting cured polymer products offer the dimensional stability normally associated with cross-linked materials as well as toughness and tensile strength. They are particularly useful as thermoset toughness and in adhesive formulations.

The invention is further illustrated by the following Examples which should not be regarded as limiting the invention, and for which the following information is provided.

### Materials used:

### Polymer A:

a selectively hydrogenated polystyrene-polybutadiene-polystyrene block copolymer (KRATON G 1652) modified to contain 0.12 meq of grafted maleic anhydride per gram of polymer, primarily in the aliphatic part of the block copolymer, the modification having been accomplished via extruder maleation.

### Polymer B:

similar to polymer A, and containing 0.22 mmol of acid functionality per gram of polymer, primarily in the styrene block, modification achieved via metalation.

### Polymer C:

similar to polymer A, but based on a higher molecular weight, selectively hydrogenated block copolymer (KRATON G 1650) and containing 0.9 mmol of acid functionality per gram of polymer, primarily in the styrene block, and introduced via metalation.

### 4-Chloromethylbenzocyclobutene:

prepared from p-methyl benzyl chloride in two steps according to the procedure reported by G.W. Ewing and V. Boekelheide in J. Chem. Soc. Chem. Commun., 1979, 207. The p-methylbenzyl chloride was first alkylated with paraformaldehyde in the presence of ZnCl₂ and a catalytic amount of HCl to give 2,4-bis(chloromethyl)toluene. Subsequent ring closure, with the elimination of HCl, to form the benzocyclobutene was performed by vacuum pyrolysis at 700 °C and <1 torr to give 4-chloromethylbenzocyclobutene.

Preparation of 4-chloromethylbenzocyclobutene was also effected by a similar procedure beginning with o-methylbenzyl chloride, however, the procedure yielded about a 1:2 mixture of 3-chloromethylbenzocyclobutene and 4-chloromethylbenzocyclobutene.

### Example I

A sample of the polymer A was dissolved in tetrahydrofuran and titrated to the phenolphthalein end point with 1 N methanolic tetra-n-butylammonium hydroxide. The resulting polymer solution was refluxed with two equivalents of propargyl bromide, vinylbenzyl bromide or 4-(2-oxazolinyl)benzyl bromide per equivalent of anhydride for four hours. The esterified polymer product was recovered as a precipitate upon addition of methanol. In all cases, the nuclear magnetic resonance spectra were consistent with the presence of the desired reactive unsaturated group within the polymer. Also prepared by this procedure, although not of the invention, were polymers having pendant benzyl and allyl ester groups (hereinafter referred to as Comparative Experiments).

### Example II

To evaluate the thermal cross-linkability of the polymeric esters produced according to Example I as well as those of the Comparative Experiments, the polymers were compression moulded at 250 °C for 10 minutes. In the case of the polymeric ester containing pendant 4-(2-oxazolinyl)benzyl ester groups, a mixture of the polymer with an equal proportion by weight of the polymer A was employed and the sample was moulded at 200 °C for 1 hour. The resulting films were evaluated for solubility and the glass transition temperature of the polystyrene block by employing a Rheobibron dynamic mechanical analyzer. The results are shown in the following Table.

**Table**

| Pendant Ester Group | Solubility in THF | Glass Transition Temp. of Polystyrene Block |
|---|---|---|
| benzyl | yes | 104 °C (Comp. Exp.) |
| allyl | disintegrates | -- (Comp. Exp.) |
| propargyl | no | 112 °C |
| vinylbenzyl | no | 115 °C |
| polymer A | yes | 128 °C (Comp. Exp.) |
| polymer A + 4-(2-oxazolinyl)benzyl | no | 128 °C |

### Example III

The procedure of Example I was repeated with the exception that 5.9 mmol of 4-chloromethylbenzocyclobutene was used per 0.36 mmol of neutralized anhydride and refluxing was continued for 24 h. The ester-modified product was recovered by precipitation with a mixture of acetone and isopropanol. The presence of ester linkages was confirmed by the appearance of a strong carbonyl absorption at approximately 1740 cm⁻¹ in the infrared and the disappearance of the carboxylate absorption at 1550 cm⁻¹.

### Example IV

The polymer A and the ester-modified polymer product of Example III were separately compression moulded at 250 °C for 5 minutes. The resulting moulded article of polymer A was soluble in tetrahydrofuran, however, the resulting moulded article of ester-modified polymer was insoluble in tetrahydrofuran, thereby confirming incorporation of benzocyclobutene and cross-linking of the polymer during the compression moulding.

### Example V

The procedure of Example III was repeated with the exception that 50 g of polymer B was used in combination with 22.2 mmol of 4-chlorobenzocyclobutene, and that the esterification was conducted in the presence of 1.16 mmol of tetrabutylammonium iodide as an esterification promoter. The cooled mixture was filtered to remove trace amounts of gel and the filtrate was added to 2 litres of isopropanol with stirring. The precipitated product was recovered by filtration, washed with isopropanol and dried in vacuo to give 45 g of product. The ¹H-NMR spectra were consistent with the presence of benzocyclobutene methyl ester groups.

The esterified polymer and a sample of KRATON G 1652 were compression moulded at 250 ° for 5 minutes.

The stress-strain and stress relaxation behaviour at 70 °C of the two compression moulded samples were compared. The stress-strain curves were measured at a strain rate of 0.5 in/min while the stress relaxation tests were done at an initial stress of 125 psi. The results showed that cross-linking of the styrene block improved the tensile properties and resistance to stress relaxation at 70 °C. For tensile properties, cross-linking increased flow stress and ductility; for stress relaxation behaviour, the strain rate reduction for equivalent stress reduction was greater.

### Example VI

The procedure of Example V was repeated with the exception that polymer B was replaced with polymer C and that the reaction mixture was refluxed for 4 h. The polymer product was precipitated by addition of isopropanol with stirring. The precipitated product was recovered by filtration, washed with isopropanol and dried in vacuo. The nearly quantitative conversion of the carboxylate ions to 4-benzocyclobutene methyl esters was confirmed by the disappearance of the carboxylate absorption at 1560 cm⁻¹ in the infrared and the appearance of a strong carbonyl absorption at approximately 1720 cm⁻¹.

### Example VII

Compression moulding of the polymer of Example VI at 250 °C for 5 minutes gave cross-linked films which were insoluble in either toluene or THF, whereas films moulded at 150 °C for 30 minutes were soluble.

Dynamic thermomechanical analysis showed that cross-linking via benzocyclobutenes raised the glass transition temperature of the polystyrene domain by 8 °C but had no effect on the glass transition temperature of the rubber phase. This suggests that cross-linking occurs mostly in the polystyrene phase.

## Claims (Claims for the following Contracting State(s): BE, DE, FR, GB, IT, NL)

1. Heat-curable elastomeric polymers comprising elastomeric polymers having at least one pendant carboxylic acid ester group, wherein the ester moiety is a group R¹, wherein each R¹ is independently propargyl, vinylbenzyl or 4-(2-oxazolinyl) benzyl, or contains an arylcyclobutene group.

2. Heat-curable polymers as claimed in claim 1, wherein each R¹ independently represents propargyl, vinylbenzyl(formerly named styrylmethyl) or 4-(2-oxazolinyl)benzyl, or a group R-Z wherein R is an alkylene group of up to 4 carbon atoms, and Z is an arylcyclobutene group.

3. Heat-curable polymers as claimed in claim 2, wherein the elastomeric polymers have at least two pendant ester groups wherein R¹ is propargyl, vinylbenzyl, or 4-(2-oxazolinyl)benzyl.

4. Heat-curable polymers as claimed in claim 2, wherein R¹ represents a group of general formula -R-Z, wherein R is an alkylene group of up to 4 carbon atoms, and Z is an arylcyclobutene group.

5. Heat-curable polymers as claimed in any one of claims 1-4, wherein the elastomeric polymers are selectively hydrogenated block copolymers based on block copolymers comprising at least one block of predominantly polymerised vinyl aromatic compounds and at least one block of predominantly polymerized conjugated alkadiene.

6. Heat-curable polymers as claimed in claim 5, wherein the hydrogenated block copolymers are SEBS-type polymers.

7. Heat-curable polymers as claimed in any one of claims 1-6, wherein the pendant ester group is based on maleic acid functionality which is attached directly to an aliphatic portion of the elastomeric polymer.

8. Heat-curable polymers as claimed in any one of claims 1-6, wherein the pendant ester group is based on a maleic acid anhydride group attached directly to an aliphatic monomer entity forming part of the elastomeric polymer.

9. Heat-curable polymers as claimed in any one of claims 5-8, wherein R¹ is propargyl.

10. Heat-curable polymers as claimed in any one of claims 4-8, wherein R is methylene or ethylene and Z is benzocyclobutene.

11. A process for the preparation of heat-curable elastomers as claimed in claim 1, which comprises the neutralization of a carboxylic acid-modified elastomeric polymer, followed by reaction with a compound of formula YR¹ wherein Y is halogen or sulphonic ester and R¹ represents propargyl, vinylbenzyl or 4-(2- oxazolinyl) benzyl, or contains an arylcyclobutene group.

12. A process as claimed in claim 11, wherein Y is halogen and R¹ is propargyl, vinylbenzyl or 4-(2-oxazolinyl)benzyl or a group ∼R-Z, wherein Z represents an arylcyclobutene group.

13. A process as claimed in claim 12, wherein R¹ is a group -R-Z arylcyclobutene group.

14. A process as claimed in any one of claims 11-13 wherein Y is chloro or bromo.

15. Heat-cured elastomeric polymers based on heat-curable polymers as claimed in any one of claims 1-10, and heated to a temperature of at least 175 °C.

16. Heat-cured elastomeric polymers as claimed in claim 15, wherein the polymers have been heated to a temperature of at least 200 °C.

## Claims (Claims for the following Contracting State(s): ES)

1. A process for the preparation of heat-curable elastomers comprising elastomeric polymers having at least one pendant carboxylic acid ester group, wherein the ester moiety is a group R¹, wherein each R¹ is independently propargyl, vinylbenzyl or 4-(2-oxazolinyl) benzyl, or contains an arylcyclobutene group, which comprises the neutralization of a carboxylic acid-modified elastomeric polymer, followed by reaction with a compound of formula YR¹ wherein Y is halogen or sulphonic ester and R¹ is as defined above.

2. A process as claimed in claim 1, wherein elastomeric polymers are prepared in which each R¹ independently represents propargyl, vinylbenzyl (formerly named styrylmethyl) or 4-(2-oxazolinyl)benzyl, or a group R-Z wherein R is an alkylene group of up to 4 carbon atoms, and Z is an arylcyclobutene group.

3. A process as claimed in claim 2, wherein elastomeric polymers are prepared which have at least two pendant ester groups wherein R¹ is propargyl, vinylbenzyl, or 4-(2-oxazolinyl)benzyl.

4. A process as claimed in claim 2, wherein R¹ represents a group of general formula -R-Z, wherein R is an alkylene group of up to 4 carbon atoms, and Z is an arylcyclobutene group.

5. A process as claimed in any one of claims 1-4, wherein the elastomeric polymers are selectively hydrogenated block copolymers based on block copolymers comprising at least one block of predominantly polymerized vinyl aromatic compounds and at least one block of predominantly polymerized conjugated alkadiene.

6. A process as claimed in claim 5, wherein the hydrogenated block copolymers are SEBS-type polymers.

7. A process as claimed in any one of claims 1-6, wherein elastomeric polymers are prepared in which the pendant ester group is based on maleic acid funcationality which is attached directly to an aliphatic portion of the elastomeric polymer.

8. A process as claimed in any one of claims 1-6, wherein elastomeric polymers are prepared in which the pendant ester group is based on a maleic acid anhydride group attached directly to an aliphatic monomer entity forming part of the elastomeric polymer.

9. A process as claimed in any one of claims 5-8, wherein elastomeric polymers are prepared in which R¹ is propargyl.

10. A process as claimed in any one of claims 4-8, wherein elastomeric polymers are prepared in which R is methylene or ethylene and Z is benzocyclobutene.

11. A process as claimed in any one of claims 1 to 10, wherein in the reactant YR¹, Y is halogen and R¹ is propargyl, vinylbenzyl or 4-(2-oxazolinyl)benzyl or a group∼R-Z, wherein Z represents an arylcyclobutene group.

12. A process as claimed in claim 11, wherein in the reactant, YR¹, R¹ is a group -R-Z arylcyclobutene group.

13. A process as claimed in claim 12 or claim 13 wherein Y is chloro or bromo.

14. A process for the preparation of heat-cured elastomeric polymers which comprises heating heat-curable polymers prepared by a process as claimed in any one of claims 1-13 to a temperature of at least 175°C.

15. A process as claimed in claim 14, wherein the polymers are heated to a temperature of at least 200°C.

## Patentansprüche (Patentansprüche für folgende(n) Vertragsstaat(en): BE, DE, FR, GB, IT, NL)

1. Heißhärtende Elastomerpolymere, bestehend aus Elastomerpolymeren mit mindestens einer anhängenden Carbonsäureestergruppe, wobei es sich bei dem Esteranteil um eine Gruppe R¹ handelt und wobei R¹ jeweils unabhängig Propargyl, Vinylbenzyl oder 4-(2-Oxazolinyl)benzyl bedeutet oder eine Arylcyclobutengruppe enthält.

2. Heißhärtende Polymere nach Anspruch 1, wobei R¹ jeweils unabhängig für Propargyl, Vinylbenzyl (früher Styrylmethyl genannt) oder 4-(2-Oxazolinyl)benzyl, oder für eine Gruppe R-Z, in der R eine Alkylengruppe mit bis zu 4 Kohlenstoffatomen bedeutet, steht, und Z eine Arylcyclobutengruppe bedeutet.

3. Heißhärtende Polymere nach Anspruch 2, wobei die Elastomerpolymere mindestens zwei anhängende Estergruppen aufweisen, wobei R¹ Propargyl, Vinylbenzyl oder 4-(2-Oxazolinyl)benzyl bedeutet.

4. Heißhärtende Polymere nach Anspruch 2, wobei R¹ für eine Gruppe der allgemeinen Formel -R-Z steht und wobei R eine Alkylengruppe mit bis zu 4 Kohlenstoffatomen und Z eine Arylcyclobutengruppe bedeuten.

5. Heißhärtende Polymere nach einem der Ansprüche 1-4, wobei es sich bei den Elastomerpolymeren um auf Blockcopolymeren bestehend aus mindestens einem Block aus überwiegend polymerisierten vinylaromatischen Verbindungen und mindestens einem Block aus überwiegend polymerisiertem konjugiertem Alkadien basierende, selektiv hydrierte Blockcopolymere handelt.

6. Heißhärtende Polymere nach Anspruch 5, wobei es sich bei den hydrierten Blockcopolymeren um SEBS-Polymere handelt.

7. Heißhärtende polymere nach einem der Ansprüche 1-6, wobei die anhängende Estergruppe auf einer direkt am aliphatischen Teil des Elastomerpolymers angebauten Maleinsäurefunktionalität basiert.

8. Heißhärtende Polymere nach einem der Ansprüche 1-6, wobei die anhängende Estergruppe auf einer direkt an einer aliphatischen Monomereinheit, die einen Teil des Elastomerpolymers darstellt, angebauten Maleinsäureanhydridgruppe basiert.

9. Heißhärtende Polymere nach einem der Ansprüche 5-8, wobei R¹ Propargyl bedeutet.

10. Heißhärtende Polymere nach einem der Ansprüche 4-8, wobei R Methylen oder Ethylen und Z Benzocyclobuten bedeutet.

11. Verfahren zur Herstellung von heißhärtenden Elastomeren nach Anspruch 1, bei dem man ein carbonsäuremodifiziertes Elastomerpolymer neutralisiert und nachfolgend mit einer Verbindung der Formel YR¹, in der Y Halogen oder Sulfonsäureester bedeutet und R¹ für Propargyl, Vinylbenzyl oder 4-(2-Oxazolinyl)benzyl steht oder eine Arylcyclobutengruppe enthält, umsetzt.

12. Verfahren nach Anspruch 11, wobei Y Halogen und R¹ Propargyl, Vinylbenzyl oder 4-(2-Oxazolinyl)benzyl oder eine Gruppe ∼R-Z, in der Z für eine Arylcyclobutengruppe steht, bedeuten.

13. Verfahren nach Anspruch 12, wobei R¹ eine -R-Z Arylcyclobutengruppe bedeutet.

14. Verfahren nach einem der Ansprüche 11-13, wobei Y Chlor oder Brom bedeutet.

15. Heißgehärtete Elastomerpolymere, basierend auf heißhärtenden Polymeren nach einem der Ansprüche 1-10, die auf eine Temperatur von mindestens 175°C erhitzt wurden.

16. Heißhärtende Elastomerpolymere nach Anspruch 15, wobei die Polymere auf eine Temperatur von mindestens 200°C erhitzt wurden.

## Patentansprüche (Patentansprüche für folgende(n) Vertragsstaat(en): ES)

1. Verfahren zur Herstellung von heißhärtenden Elastomeren, bestehend aus Elastomerpolymeren mit mindestens einer anhängenden Carbonsäureestergruppe, wobei es sich bei dem Esteranteil um eine Gruppe R¹ handelt und wobei R¹ jeweils unabhängig Propargyl, Vinylbenzyl oder 4-(2-Oxazolinyl)benzyl bedeutet oder eine Arylcyclobutengruppe enthält, bei dem man ein carbonsäuremodifiziertes Elastomerpolymer neutralisiert und nachfolgend mit einer Verbindung der Formel YR¹, in der Y Halogen oder Sulfonsäureester bedeutet und R¹ wie oben definiert ist, umsetzt.

2. Verfahren nach Anspruch 1, wobei man Elastomerpolymere herstellt, in denen R¹ jeweils unabhängig für Propargyl, Vinylbenzyl (früher Styrylmethyl genannt) oder 4-(2-Oxazolinyl)benzyl, oder eine Gruppe R-Z, in der R eine Alkylengruppe mit bis zu 4 Kohlenstoffatomen bedeutet, steht und Z eine Arylcyclobutengruppe bedeutet.

3. Verfahren nach Anspruch 2, wobei man Elastomerpolymere herstellt, die mindestens zwei anhängende Estergruppen aufweisen, wobei R¹ Propargyl, Vinylbenzyl oder 4-(2-Oxazolinyl)benzyl bedeutet.

4. Verfahren nach Anspruch 2, wobei R¹ für eine Gruppe der allgemeinen Formel -R-Z steht, in der R eine Alkylengruppe mit bis zu 4 Kohlenstoffatomen und Z eine Arylcyclobutengruppe bedeuten.

5. Verfahren nach einem der Ansprüche 1-4, wobei es sich bei den Elastomerpolymeren um auf Blockcopolymeren bestehend aus mindestens einem Block aus überwiegend polymerisierten vinylaromatischen Verbindungen und mindestens einem Block aus überwiegend polymerisiertem konjugiertem Alkadien basierende, selektiv hydrierte Blockcopolymere handelt.

6. Verfahren nach Anspruch 5, wobei es sich bei den hydrierten Blockcopolymeren um SEBS-Polymere handelt.

7. Verfahren nach einem der Ansprüche 1-6, wobei man Elastomerpolymere herstellt, in denen die anhängende Estergruppe auf einer direkt am aliphatischen Teil des Elastomerpolymers angebauten Maleinsäurefunktion basiert.

8. Verfahren nach einem der Ansprüche 1-6, wobei man Elastomerpolymere herstellt, in denen die anhängende Estergruppe auf einer direkt an einer aliphatischen Monomereinheit, die einen Teil des Elastomerpolymers darstellt, angebauten Maleinsäureanhydridgruppe basiert.

9. Verfahren nach einem der Ansprüche 5-8, wobei man Elastomerpolymere herstellt, in denen R¹ Propargyl bedeuten.

10. Verfahren nach einem der Ansprüche 4-8, wobei man Elastomerpolymere herstellt, in denen R Methylen oder Ethylen und Z Benzocyclobuten bedeuten.

11. Verfahren nach einem der Ansprüche 1 bis 10, wobei im Reaktanden YR¹ Y Halogen und R¹ Propargyl, Vinylbenzyl oder 4-(2-Oxazolinyl)benzyl oder eine Gruppe ∼R-Z, in der Z für eine Arylcyclobutengruppe steht, bedeutet.

12. Verfahren nach Anspruch 11, wobei in dem Peaktanden YR¹ R¹ eine -R-Z Arylcyclobutengruppe bedeutet.

13. Verfahren nach Anspruch 12 oder 13, wobei Y Chlor oder Brom bedeutet.

14. Verfahren zur Herstellung von heißgehärteten Elastomerpolymeren, bei dem man in einem Verfahren nach einem der Ansprüche 1-13 hergestellte heißhärtende Polymere auf eine Temperatur von mindestens 175°C erhitzt.

15. Verfahren nach Anspruch 14, wobei man die Polymere auf eine Temperatur von mindestens 200°C erhitzt.

## Revendications (Revendications pour l'(les) Etat(s) contractant(s) suivant(s): BE, DE, FR, GB, IT, NL)

1. Polymères élastomères thermodurcissables comprenant des polymères élastomères ayant au moins un groupe ester d'acide carboxylique pendant, où la portion ester est un groupe R¹, où chaque R¹ indépendamment est un groupe propargyle, vinylbenzyle ou 4-(2-oxazolinyl) benzyle ou contient un groupe arylcyclobutène.

2. Polymères thermodurcissables selon la revendication 1, dans lesquels chaque R¹ indépendamment représente un groupe propargyle, vinylbenzyle (appelé autrefois styrylméthyle) ou 4-(2-oxazolinyl)benzyle, ou un groupe R-Z où R est un groupe alcoylène de jusqu'à 4 atomes de carbone et Z est un groupe arylcyclobutène.

3. Polymères thermodurcissables selon la revendication 2, dans lesquels les polymères élastomères ont au moins deux groupes ester pendants dans lesquels R¹ est un groupe propargyle, vinylbenzyle ou 4-(2-oxazilinyl)benzyle.

4. Polymères thermodurcissables selon la revendication 2, dans lesquels R¹ représente un groupe de formule -R-Z, où R est un groupe alcoylène de jusqu'à 4 atomes de carbone et Z est un groupe arylcyclobutène.

5. Polymères thermodurcissables selon l'une quelconque des revendications 1-4, où les polymères élastomères sont des copolymères séquencés sélectivement hydrogénés à base de copolymères séquences comprenant au moins un bloc de principalement des composés vinyl aromatiques polymérisés et au moins un bloc de principalement un alcadiène conjugué polymérisé.

6. Polymères thermodurcissables selon la revendication 5, dans lesquels les copolymères séquences hydrogénés sont des polymères du type SEBS.

7. Polymères thermodurcissables selon l'une quelconque des revendications 1-6, dans lesquels le groupe ester pendant est à base de fonctionnalité acide maléique qui est attachée directement à une portion aliphatique du polymère élastomère.

8. Polymères thermodurcissables selon l'une quelconque des revendications 1-6, dans lesquels le groupe ester pendant est à base d'un groupe anhydride d'acide maléique attaché directement à une entité monomère aliphatique faisant partie du polymère élastomère.

9. Polymères thermodurcissables selon l'une quelconque des revendications 5-8, dans lesquels R¹ est un groupe propargyle.

10. Polymères thermodurcissables selon l'une quelconque des revendications 4-8, dans lesquels R est un groupe méthylène ou éthylène et Z est un groupe benzocyclobutène.

11. Un procédé pour la préparation de polymères élastomères thermodurcissables tels que revendiqués dans la revendication 1, qui comprend la neutralisation d'un polymère élastomère modifié par acide carboxylique, suivie d'une réaction avec un composé de formule YR¹ où Y est un atome d'halogène ou un groupe ester sulfonique et R¹ représente un groupe propargyle, vinylbenzyle ou 4-(2-oxazolinyl)benzyle, ou contient un groupe arylcyclobutène.

12. Un procédé selon la revendication 11, dans lequel Y est un atome d'halogène et R¹ est un groupe propargyle, vinylbenzyle ou 4-(2-oxazolinyl)benzyle ou un groupe ∼R-Z, où Z représente un groupe arylcyclobutène.

13. Un procédé selon la revendication 12, dans lequel R¹ est un groupe -R-Z arylcyclobutène.

14. Un procédé selon l'une quelconque des revendications 11-13, dans lequel Y est du chlore ou du brome.

15. Polymères élastomères durcis par la chaleur a base de polymères thermodurcissables selon l'une quelconque des revendications 1-10, et chauffés à une température d'au moins 175°C.

16. Polymères élastomères durcis par la chaleur selon la revendication 15, où les polymères ont été chauffés à une température d'au moins 200°C.

## Revendications (Revendications pour l'(les) Etat(s) contractant(s) suivant(s): ES)

1. Un procédé pour la préparation d'élastomères thermodurcissables comprenant des polymères élastomères ayant au moins un groupe ester d'acide carboxylique pendant, où la portion ester est un groupe R¹, où chaque R¹ indépendamment est un groupe propargyle, vinylbenzyle ou 4-(2-oxazolinyl)benzyle, ou contient un groupe arylcyclobutène, qui comprend la neutralisation d'un polymère élastomère modifié par acide carboxylique, suivie d'une réaction avec un composé de formule YR¹ où Y est un atome d'halogène ou un groupe ester sulfonique et R¹ est tel que défini ci-dessus.

2. Un procédé selon la revendication 1, dans lequel on prépare des polymères élastomères dans lesquels chaque R¹ indépendamment représente un groupe propargyle, vinylbenzyle (appelé autrefois styrylméthyle) ou 4-(2-oxazolinyl)benzyle, ou un groupe R-Z où R est un groupe alcoylène de jusqu'à 4 atomes de carbone et Z est un groupe arylcyclobutène.

3. Un procédé selon la revendication 2, dans lequel on prépare des polymères élastomères qui ont au moins deux groupes ester pendants où R¹ est un groupe propargyle, vinylbenzyle ou 4-(2-oxazolinyl)benzyle.

4. Un procédé selon la revendication 2, dans lequel R¹ représente un groupe de formule générale -R-Z, où R est un groupe alcoylène de jusqu'à 4 atomes de carbone et Z est un groupe arylcyclobutène.

5. Un procédé selon l'une quelconque des revendications 1-4, dans lequel les polymères élastomères sont des copolymères séquencés sélectivement hydrogénés à base de copolymères séquencés comprenant au moins un bloc de principalement des composés vinyl aromatiques polymérisés et au moins un bloc de principalement un alcadiène conjugué polymérisé.

6. Un procédé selon la revendication 5, dans lequel les copolymères séquencés hydrogénés sont des polymères du type SEBS.

7. Un procédé selon l'une quelconque des revendications 1-6, dans lequel on prépare des polymères élastomères dans lesquels le groupe ester pendant est à base de fonctionnalité acide maléique qui est attachée directement à une portion aliphatique du polymère élastomère.

8. Un procédé selon l'une quelconque des revendications 1-6, dans lequel on prépare des polymères élastomères dans lesquels le groupe ester pendant est à base d'un groupe anhydride d'acide maléique attaché directement à une entité monomère aliphatique faisant partie du polymère élastomère.

9. Un procédé selon l'une quelconque des revendications 5-8, dans lequel on prépare des polymères élastomères dans lesquels R¹ est un groupe propargyle.

10. Un procédé selon l'une quelconque des revendications 4-8, dans lequel on prépare des polymères élastomères dans lesquels R est un groupe méthylène ou éthylène et Z est un groupe benzocyclobutène.

11. Un procédé selon l'une queconque des revendications 1 à 10, dans lequel, dans le corps en réaction YR¹, Y est un atome d'halogène et R¹ est un groupe propargyle, vinylbenzyle ou 4-(2-oxazolinyl)benzyle ou un groupe R-Z, où Z représente un groupe arylcyclobutène.

12. Un procédé selon la revendication 11, dans laquel, dans le corps en réaction YR¹, R¹ est un groupe -R-Z arylcyclobutène.

13. Un procédé selon la revendication 11 ou la revendication 12, dans lequel Y est du chlore ou du brome.

14. Un procédé pour la préparation de polymères élastomères durcis par la chaleur, qui comprend le chauffage de polymères thermodurcissables préparés par un procédé selon l'une quelconque des revendications 1-13 à une température d'au moins 175°C.

15. Un procédé selon la revendication 14, dans lequel les polymères sont chauffés à une température d'au moins 200°C.
